Europäisches Patentamt

European Patent Office

Office européen des brevets

(11) Publication number: **0 115 898**
**B1**

(12) **EUROPEAN PATENT SPECIFICATION**

(45) Date of publication of patent specification: **01.07.87**

(51) Int. Cl.⁴: **C 02 F 11/12, A 01 K 1/015**

(21) Application number: **84200155.4**

(22) Date of filing: **03.02.84**

(54) **A process for preparing liquid- or shock-absorbing material starting from waste sludge from the paper or board industry.**

(30) Priority: **04.02.83 NL 8300430**

(43) Date of publication of application:
**15.08.84 Bulletin 84/33**

(45) Publication of the grant of the patent:
**01.07.87 Bulletin 87/27**

(84) Designated Contracting States:
**BE DE FR GB IT NL**

(56) References cited:
**EP-A-0 039 522**
**DE-B-1 252 175**
**US-A-4 157 696**
**US-A-4 193 206**
**US-A-4 311 115**
**US-A-4 341 180**

The file contains technical information
submitted after the application was filed and
not included in this specification

(73) Proprietor: **KNP Papier B.V.**
**Erasmusdomein 50**
**NL-6229 BL Maastricht (NL)**

(72) Inventor: **Broens, Hubertus W.**
**Oude Baan 19**
**NL-6121 HA Buchten-Born (NL)**
Inventor: **de Wilde, Etienne F.**
**Sterrenlaan 9**
**B-3620 Rekem (BE)**
Inventor: **André de la Porte, Wicher**
**Aramislaan 82**
**NL-6213 BV Maastricht (NL)**

(74) Representative: **Urbanus, Henricus Maria, Ir.
et al
c/o Vereenigde Octrooibureaux Nieuwe
Parklaan 107
NL-2587 BP 's-Gravenhage (NL)**

Courier Press, Leamington Spa, England.

## Description

The invention relates to a process for preparing a liquid- or shock-absorbing material, wherein the waste sludge from a process in which fibers consisting completely or mainly of cellulose are wet-processed is used as starting material, which sludge is dewatered to form a semi-dry mass, which mass is then reduced in size, after which the resulting material is subjected to a drying process.

Such a process is known from EP—A 39522. According to that publication the waste sludge of paper mills, as starting material, has a content based on dry matter, of 60—80% by weight of fibers, of 40—20% by weight of filler and 0—10% by weight of admixture. In this process the waste sludge is first dewatered to form a semi-dry mass and then cylindrical pellets are produced by means of a pelleting apparatus.

Since in the paper and board industry waste sludge is often produced which has a considerably lower fiber content, the known process requires adjustment of the composition of the sludge by adding additional fibrous material. This makes the process so expensive that from an economic point of view the production of the liquid- and shock-absorbing material is no longer attractive, because this material will find a sale only if it is offered at a very low price.

The prior art pelleting process has the drawback that firstly, the rate of absorption and the absorptive capacity of the material and the bulk density are reduced during the pelleting process owing to the composition of the raw material and the pressing pressure, and that secondly, whether the pelleting process proceeds well depends highly on fluctuations in the composition of the waste sludge, which, among other things, can make it necessary to subject the sludge to a predrying process. Moreover, it has turned out that when the liquid-absorbing material is presented for use in animal cages and animal toilets, and pellet form obtained by extrusion differs so much from the products holding a fixed position on the market that this material is in poor demand. Finally, the pelleting process requires a relatively expensive pelleting mill, which again makes the process more expensive.

US—A—4,311,115 describes a process for preparing a liquid absorbing material, especially for use as animal litter, wherein the waste sludge of paper mills is mixed with partially pyrolized cellulosic residue, to which mixture a surface active compound is added. From the resulting mixture pellets are formed by means of conventional pelletizing equipment. Finally the pellets are dried. The use of a pelletizer to reduce the mixture in size has the same disadvantage as described with regard to EP—A—39522. Further this US patent contains no information as to the exact composition of the waste sludge.

US—A—4,341,180 describes a process for preparing animal litter from the waste sludge of a secondary fiber plant, the sludge having a content, based on dry matter, of 50—90% cellulose and 10—50% filler. The sludge is dewatered, cut into pieces, pelletized and dried. Also this process has the disadvantage that pellets are obtained, while also an additional step is necessary to cut the dewatered sludge into pieces. Further the waste sludge has the same high fiber content as the waste sludge according to EP—A—39522.

Finally US—A—4,157,696 describes a process for preparing animal litter from the waste sludge of a paper mill. The waste sludge is mixed with fly-ash in a ratio of 1 to 2 parts fly-ash to 1 part cellulose fibers, which mixture is pelletized. Again the drawbacks of the pelletizing process are present, and because of the addition of fly-ash the water absorbing properties differ much from those of pellets formed only from waste sludge.

The object of the invention is to provide a process for preparing a liquid- and shock-absorbing material, starting from the waste sludge from the paper and board industry, which material can be prepared without additionally adding fibers from the waste sludge and has a very high absorptive capacity and rate of absorption, and which material can be inexpensively brought into such a form as to obtain a proper adjustment to products holding a fixed position on the market.

For this purpose, the invention provides a process of the above type, characterized by

a) employing a waste sludge having a content, based on dry matter, of 20—50% by weight of fibers and 50—80% by weight of an inorganic pigment;

b) mixing said sludge with a surfactant to control the rate of absorption and the absorptive capacity of the final product;

c) dewatering said sludge to obtain a semi-dry mass which contains 40—70% by weight of water;

d) conveying said semi-dry mass by means of a screw thus granulating the material; and

e) drying the granulated product at a temperature of from 80—300°C.

The end product is granulated by means of a screw conveyor transmitting the semi-dry mass, after it has been dewatered, to the drying apparatus in which the moisture content is reduced to the desired final value. The use of a screw conveyor is not only more advantageous than the use of a pelleting mill, but, as a granular form is obtained, it also provides a better adjustment to the already established liquid-absorbing materials.

The waste sludge obtained in the waste water purification of, e.g., paper mills and used in the process according to the invention contains fibres and inorganic pigments in the weight ratio ranging from 1:1 to 0.25:1, which corresponds to 20—50% by weight of fibres and 80—50% by weight of inorganic pigment, based on the dry matter. If required, the sludge may further contain 0—10% by weight of admixture.

According to the invention a surface active compound is added to the waste sludge to control the rate of absorption and the absorptive capacity. The resulting slurry is dewatered to obtain a final moisture content varying from 1 to 10% by weight, preferably from 2 to 5% by weight. In order to economically obtain this moisture content, the slurry is first dewatered, e.g., by means of a band filter known per se, to obtain a moisture content of 70—40% by weight, preferably 65—55% by weight. The semi-dry mass is supplied to a drying apparatus via a screw mechanism. The product is granulated during the transport through the screw mechanism. These granules may be further reduced, if required, by means of a sieve, which permits the control of the final bulk density. Whether or not sieves are used depends on the drying method and the composition of the raw material.

The granulated product is dried in the drying apparatus by means of hot air having a temperature of 80—300°C, preferably 130—200°C. For an economic drying process it is advantageous to utilize for the hot air the waste heat from a boiler or a thermal power station.

After drying, the product may be sifted again so as to control the bulk density. The bulk density may vary between 250—500 kg/m$^3$, but is preferably 350—450 kg/m$^3$.

The granules prepared by the process according to the invention prove to have excellent water and oil absorbing properties. The granules may absorb 80% or more of their own weight of respectively oil and water. When these granules are used for animal cages and animal toilets, not only the high rate of absorption and absorptive capacity are advantageous, but also the granular form of the material properly adjusts to the already available similar products.

### Claims

1. A process for preparing a liquid or shock-absorbing material wherein the waste sludge from a process in which fibers consisting completely or mainly of cellulose are wet-processed is used as starting material, which waste sludge is dewatered to obtain a semi-dry mass, which mass is then reduced in size, after which the resulting material is subjected to a drying process, characterized by

a) employing a waste sludge having a content, based on dry matter, of 20—50% by weight of fibers and 50—80% by weight of an inorganic pigment;

b) mixing said sludge with a surfactant to control the rate of absorption and the absorptive capacity of the final product;

c) dewatering said sludge to obtain a semi-dry mass which contains 40—70% by weight of water;

d) conveying said semi-dry mass by means of a screw thus granulating the material; and

e) drying the granulated product at a temperature of from 80—300°C to obtain a material having a water content of from 1—10% by weight.

2. A process according to claim 1, characterized in that the waste water, based on the dry matter content, contains 0—10% by weight of an admixture.

3. A process according to claim 1 or 2, characterized in that the semi-dry mass has a moisture content of 55—65% by weight when being conveyed by the screw.

4. A process according to at least one of the preceding claims, characterized in that the granules are sifted before drying.

5. A process according to at least one of the preceding claims, characterized in that the granules are dried by means of hot air which has a temperature of 130—200°C and which is the waste heat from a boiler or a thermal power station.

6. A process according to at least one of the preceding claims, characterized in that the granules formed are dried to obtain a water content of 2—5% by weight.

7. A process according to at least one of the preceding claims, characterized in that the variables of the individual process steps are so adjusted to each other that the resulting granules have a bulk density of 350—450 kg/m$^3$.

### Patentansprüche

1. Verfahren zur Herstellung eines flüssigkeits- oder stoßabsorbierenden Materials, bei dem Abfallschlamm aus einem Verfahren, bei dem Fasern, die vollständig oder hauptsächlich aus Zellulose bestehen, einem Naßverfahren unterzogen werden, als Ausgangsmaterial verwendet wird, wobei der Abfallschlamm entwässert wird, um eine halbtrockene Masse zu erhalten, die dann komprimiert wird, wonach das erhaltene Material einem Trocknungsprozeß unterworfen wird, dadurch gekennzeichnet,

a) daß ein Abfallschlamm verwendet wird, der als Trockensubstanz 20—50 Gew.-% Fasern und 50—80 Gew.-% eines anorganischen Pigments enthält;

b) daß der Schlamm mit einer oberflächenaktiven Verbindung vermischt wird, um die Absorptionsrate und das Absorptionsvermögen des Endproduktes zu kontrollieren;

c) daß der Schlamm entwässert wird, um eine halbtrockene Masse zu erhalten, die 40—70 Gew.-% Wasser enthält;

d) daß die halbtrockene Masse mittels eines Schneckenförderers abgeführt wird, um auf diese Weise das Material zu granulieren und

e) daß das granulierte Produkt bei einer Temperatur von 80—300°C getrocknet wird, um ein Material zu erhalten, das einen Wassergehalt von 1—10 Gew.-% besitzt.

2. Verfahren nach Anspruch 1, dadurch gekennzeichnet, daß das Abwasser, basierend auf dem Trockensubstanzgehalt, 0—10 Gew.-% einer Beimischung enthält.

3. Verfahren nach Anspruch 1 oder 2, dadurch gekennzeichnet, daß die halbtrockene Masse einen Feuchtigkeitsgehalt von 55—65 Gew.-% besitzt, wenn sie mittels des Schneckenförderers abgeführt wird.

4. Verfahren nach wenigstens einem der vorhergehenden Ansprüche, dadurch gekennzeichnet, daß das Granulat vor dem Trocknen gesiebt wird.

5. Verfahren nach wenigstens einem der vorhergehenden Ansprüche, dadurch gekennzeichnet, daß das Granulat mittels Heißluft getrocknet wird, die eine Temperatur von 130—200°C besitzt und die die Abwärme aus einem Boiler oder einem Wärmekraftwerk ist.

6. Verfahren nach wenigstens einem der vorhergehenden Ansprüche, dadurch gekennzeichnet, daß das gebildete Granulat getrocknet wird, um einen Wassergehalt von 2—5 Gew.-% zu erhalten.

7. Verfahren nach wenigstens einem der vorhergehenden Ansprüche, dadurch gekennzeichnet, daß die Variablen der einzelnen Verfahrensschritte so aufeinander abgestimmt sind, daß das erhaltene Granulat ein Schüttgewicht von 350—450 kg/m³ besitzt.

## Revendications

1. Procédé pour la préparation d'une matière absorbante pour des liquides ou pour des chocs, dans lequel les boues résiduaires issues d'un procédé, où des fibres se composant en totalité ou principalement de cellulose sont traitées par voie humide, sont utilisées comme matière de départ, lesquelles boues résiduaires sont déshydratées pour obtenir une masse semi-sèche, laquelle masse est ensuite réduite en volume, après quoi la matière résultante est soumise à un procédé de séchage, caractérisé par

a) l'utilisation de boues résiduaires ayant une teneur, basée sur la matière sèche, de 20—50% en poids de fibres et de 50—80 % en poids d'un pigment inorganique;

b) le mélange desdites boues avec un agent tensio-actif pour commander le taux d'absorption et la capacité d'absorption du produit final;

c) la deshydratation desdites boues pour obtenir une masse semi-sèche qui contient 40—70% en poids d'eau;

d) le transport de ladite masse semi-sèche au moyen d'une vis en granulant ainsi la matière; et

e) le séchage du produit granulé à une température de 80—300°C pour obtenir une matière ayant une teneur en eau de 1—10% en poids.

2. Procédé selon la revendication 1, caractérisé en ce que les eaux résiduaires, basées sur la teneur de la matière sèche, contiennent 0—10 % en poids d'un additif.

3. Procédé selon la revendication 1 ou 2, caractérisé en ce que la masse semi-sèche a une teneur en humidité de 55—65% en poids quand celle-ci est transportée par la vis.

4. Procédé selon au moins une des revendications précédentes, caractérisé en ce que les granulés sont tamisés avant le séchage.

5. Procédé selon au moins une des revendications précédentes, caractérisé en ce que les granulés sont séchés au moyen d'air chaud qui a une température de 130—200°C et qui provient des pertes de chaleur d'une chaudière ou d'une station de puissance thermique.

6. Procédé selon au moins une des revendications précédentes, caractérisé en ce que les granulés formés sont séchés pour obtenir une teneur en eau de 2—5% en poids.

7. Procédé selon au moins une des revendications précédentes, caractérisé en ce que les variables des étapes individuelles du procédé sont réglées l'une par rapport à l'autre de sorte que les granulés obtenus aient une masse volumique de 350—450 kg/m³.